Europäisches Patentamt

European Patent Office

Office européen des brevets

(19)

(11) Veröffentlichungsnummer : **0 298 403 B1**

(12) # EUROPÄISCHE PATENTSCHRIFT

(45) Veröffentlichungstag der Patentschrift :
12.06.91 Patentblatt 91/24

(51) Int. Cl.⁵ : **H02K 7/10, H02K 5/04**

(21) Anmeldenummer : 88110629.8

(22) Anmeldetag : 04.07.88

(54) Antriebsmotor.

(30) Priorität : 09.07.87 DE 8709409 U

(43) Veröffentlichungstag der Anmeldung :
11.01.89 Patentblatt 89/02

(45) Bekanntmachung des Hinweises auf die
Patenterteilung :
12.06.91 Patentblatt 91/24

(84) Benannte Vertragsstaaten :
AT BE CH DE ES FR GB IT LI LU NL SE

(56) Entgegenhaltungen :
DE-U- 7 901 479
GB-A- 1 040 864
US-A- 1 971 968
PATENT ABSTRACTS OF JAPAN, Band 7, Nr.
218 (E-200)(1363), 28. September 1983; & JP-
A-58 108 943

(73) Patentinhaber : **Rixen, Wolfgang, Dipl.-Ing.**
**Friedenstrasse 107-109**
**W-5650 Solingen (DE)**
Patentinhaber : **Pies, Gerrit**
**Friedenstrasse 107-109**
**W-5650 Solingen (DE)**

(72) Erfinder : **Rixen, Wolfgang, Dipl.-Ing.**
**Friedenstrasse 107-109**
**W-5650 Solingen (DE)**
Erfinder : **Pies, Gerrit**
**Friedenstrasse 107-109**
**W-5650 Solingen (DE)**

(74) Vertreter : **Sturies, Herbert et al**
**Patentanwälte Dr. Ing. Dipl. Phys. Herbert**
**Sturies Dipl. Ing. Peter Eichler Brahmsstrasse**
**29, Postfach 20 12 42**
**W-5600 Wuppertal 2 (DE)**

## Beschreibung

Die Erfindung bezieht sich auf einen Antriebsmotor, insbesondere elektrischer Servomotor, mit einem Motorgehäuse, das einen abtriebswellenseitigen Gehäuseflansch hat, an dem ein mit dem Antriebsmotor drehantriebsmäßig zusammenwirkender Motormodul mit einem Anschlußflansch seines Modulgehäuses befestigt ist, wobei ein weiterer, ein Modulgehäuse aufweisender Motormodul gleichachsig anbaubar ist.

Ein solcher Antriebsmotor ist aus der GB-A-1 040 864 bekannt. An den abtriebswellenseitigen Gehäuseflansch des Antriebsmotors ist ein Bremsenmodul befestigt. Als weiterer Motormodul ist ein Kupplungsmodul vorhanden, der zwischen den Antriebsmotor und den Bremsenmodul einbaubar ist. Die Modulgehäuse besitzen zwar denselben Außendurchmesser, sind aber im übrigen zur Anpassung an die von ihnen aufgenommenen Bauteile mit unterschiedlichen Querschnitten ausgestattet. Die Befestigung der beiden Module mit dem Antriebsmotor erfolgt derart, daß der motornächste Modul achsparallel mit seinem Gehäuse gegen das Motorgehäuse geschraubt wird, also der Kupplungsmodul am Antriebsmotor. Der motorferne Modul wird seinerseits mit seinem Gehäuse achsparallel am Gehäuse des Kupplungsmoduls befestigt, wobei die Befestigungsschrauben der beiden Module im Sinne einer gleichmäßigen Verteilung aller Schrauben über dem gesamten Umfang zueinander winkelmäßig versetzt sind. Der Aufbau der Baugruppe ist infolge der unterschiedlichen Ausbildung der Modulgehäuse und ihres Zusammenbaus miteinander und mit dem Antriebsmotor vergleichsweise aufwendig und letzterer gestattet den Anbau der Module auch nur abtriebswellenseitig.

Desweiteren ist aus dem DE-U-79 01 479 ein Getriebe für einen Rohrmotor bekannt, der beispielsweise für den Antrieb von Rolläden eingesetzt wird. Der Antriebsmotor ist in eine Rohrwelle eingebaut und stirnseitig mit einer Mehrzahl von Gehäuseteilen eines Getriebegehäuses zusammengebaut. Die Getriebegehäuse haben alle denselben, den Innendurchmesser der Rohrwelle angepaßten Außendurchmesser. Die Gehäuseteile sind relativ zueinander verdrehfest, weil sie mit in der Nähe des Aussenumfangs verteilt angeordneten Axialvorsprüngen ineinandergreifen, so daß eine klauenartige Verbindung zwischen den Gehäuseteilen gegeben ist. Im Inneren einiger Gehäuseteile sind Getriebeteile eines Planetengetriebes angeordnet, um die Drehzahl des Antriebsmotors zu untersetzen. Der Aufbau der bekannten Getriebegehäuse ist infolge der klauenartigen Ausbildung der Getriebegehäuse nicht massenfertigungsgerecht und mehrere Gehäuse bedürfen zu ihrem Zusammenhalt der Rohrwelle, so daß das bekannte Getriebe offensichtlich auf den speziellen Einsatz zweckspezialisiert und damit auch beschränkt ist.

Ferner ist ein pneumatischer Antriebszylinder allgemein bekannt, dessen Gehäuse als Strangpreßprofil ausgebildet ist. Die Stirnflächen des Zylindergehäuses können mit Befestigungsschrauben an einer Tragfläche festgespannt werden. Zuleitungsanschlüsse sind seitlich vorhanden.

Der Erfindung liegt die Aufgabe zugrunde, einen Antriebsmotor der eingangs genannten Art so zu verbessern, daß sein Aufbau und der Aufwand für seine Herstellung vereinheitlicht bzw. vereinfacht werden und der Antriebsmotor eine Vielzahl von Modulen aufweisen kann.

Diese Aufgabe wird dadurch gelöst, daß das Motorgehäuse einen dem abtriebswellenseitigen Gehäuseflansch parallelen gleichachsigen Gehäuseflansch hat, und daß sowohl das Motorgehäuse als auch mindestens ein Modulgehäuse aus stranggepreßten und abgelängten Profilstücken bestehen, die alle dasselbe Querschnittsprofil haben und dem Zusammenspannen der Gehäuse dienende fluchtende Durchgangsbohrungen aufweisen.

Für die Erfindung ist wesentlich, daß nicht nur das Motorgehäuse Gehäuseflansche mit dem gleichen Flanschbild aufweist, sondern daß auch das Motormodul bzw. mehrere Motormodule ein Gehäuse mit im Flanschbild gleichen Anschlußflanschen aufweisen. Hierdurch wird gewährleistet, daß das Motormodul an jedem Ende des Motorgehäuses angeflanscht werden kann, und zwar bedarfsweise mit jedem seiner Anschlußflansche. Dadurch ist größte Flexibilität im Aufbau solcher mit mehreren Motormodulen zu versehenen Antriebsmotoren gewährleistet. Es entfallen jegliche von Fall zu Fall unterschiedliche Anschlußprobleme, insbesondere sind keine Adapterteile erforderlich, die nicht nur den Herstellungsaufwand vergrößern, sondern auch die Eigenschaften des Antriebsmotors negativ beeinflussen, beispielsweise dessen Kompaktheit und die Stabilität des Gesamtzusammenbaus.

Außer des individuellen Aufbaus des Antriebsmotors mit den jeweils notwendigen Motormodulen ist auch eine individuelle Kombination der Module untereinander möglich, sowie eine auch nachträgliche Umrüstung bereits hergestellter oder im Einsatz befindlicher Antriebsmotoren. Der Antriebsmotor bildet also ein Baukastensystem, bei dem das Motorgehäuse durch Motormodule bzw. deren Gehäuse auf beiden Seiten anbaubar bzw. verlängerbar ist, wobei das ansprechende Aussehen des kompakten Motors durch derartige Anbauten nicht störend beeinflußt wird. Es ergibt sich ein besseres Design des Antriebsmotors bzw. der gesamten Baugruppe und eine bessere Einbaubarkeit bzw. Verwendbarkeit dadurch, daß der Aufbau des Antriebsmotors bzw. dessen Ergänzung durch weitere Module nur in dessen Längsrichtung erfolgt, eine radiale Beeinflussung also unterbleibt und bei seiner Verwendung insbesondere im Ergänzungsfall keine Rücksicht auf radial benachbarte Bauteile beispielsweise der zugehörigen Werkzeugmaschine Rücksicht genommen werden muß.

Dabei wird nicht ausgeschlossen, daß der Antriebsmotor mit einem einzigen Motormodul auskommen kann, beispielsweise einem Getriebemodul zur Untersetzung der Motordrehzahl. Der wesentliche Vorteil des mit einem solchen Getriebe versehenen Antriebsmotors besteht darin, daß beide Gehäuse den grundsätzlich gleichen Aufbau haben können. Das ergibt Herstellungsvorteile und führt zu einer problemlosen Ergänzbarkeit mit weiteren Motormodulen. Diese sind dann beispielsweise auch zwischen dem Getriebemodul und dem Motorgehäuse einbau- bzw. nachrüstbar und es ist auch ein Anbau eines weiteren Motormoduls sogar auf der Getriebeabtriebsseite möglich, beispielsweise um exakte Messungen mit einem Inkrementalgeber durchzuführen. Meßungenauigkeiten durch Getriebespiel, Lagerspiel oder Wellenverwindung bei hohen Betätigungskräften entfallen.

Vorteilhafterweise haben alle Motor- und Modulgehäuse dasselbe Querschnittsprofil. Das bedeutet eine weitere Vereinheitlichung des gesamten Antriebsmotors bzw. des gesamten Aggregats unter Beibehaltung der oben genannten Vorteile, wobei die Gehäuse mittels der im Flanschbild jeweils gleichen Gehäuse- und Anschlußflansche aneinandergereiht sind. Damit ist ein Steckaufbau des Aggregats erreichbar, der sehr einfach ist und insbesondere dann zu einem ansprechenden Äußeren führt, wenn alle Gehäuse dieselben Außenabmessungen haben.

Zur Vereinfachung des Zusammenbaus ist der Antriebsmotor so ausgestaltet, daß in den Verbindungsbohrungen der Motor- und Modulgehäuse letztere zentrierende und/oder zusammenspannende Zentrierstifte bzw. Zuganker vorhanden sind. Dabei können die Verbindungteile massenfertigungsgerechte Stifte, Gewindestangen und Gewindebuchsen sein.

Alle Motor- und Modulgehäuse haben ein rechtwinkliges Querschnittsprofil mit jeweils mindestens einer fluchtenden hinterschnittenen Längsnut, die in einer Profilecke angeordnet und bedarfsweise auf mindestens zwei Gehäuseseitenflächen verteilt ist bzw. sind. Eine solche Längsnut dient der in Längsrichtung stufenlosen Befestigung des Antriebsmotors mittels eingreifender Verbindungselemente, wie sie beispielsweise in der DE-OS 33 28 142 beschrieben sind. Die Längsnut bzw. mehrere Längsnuten sind also systemgerechte Befestigungsmittel, die für ein- oder mehrfache Befestigung des Antriebsmotors geeignet sind, insbesondere an Maschinenelementen, die in ihren Teilen, z.B. in Gestellstreben, entsprechende Längsnuten aufweisen. Die Längsnut bzw. mehrere Längsnuten vergrößern außerdem die wärmeabgebende Oberfläche des Gehäuses und tragen infolgedessen zugleich dazu bei, vergleichsweise leistungsstarke Motoren in kleinen Querschnitten unterbringen zu können. Das wird besonders dadurch begünstigt, daß die Längsnut bzw. mehrere Längsnuten in einer Profilecke angeordnet sind. Die Verteilung mehrerer Längsnuten auf mehrere Gehäuseseitenflächen trägt ebenfalls dazu bei und bewirkt bzw. vergrößert die Universalität der Befestigungsmöglichkeiten der Motor- und Modulgehäuse des Antriebsmotors erheblich.

Alle Motor und Modulgehäuse haben eine kreiszylindrische, zur Aufnahme von Antriebs- und Einbauteilen bestimmte Ausnehmung, der radiale Kühlrippen in benachbarten Bereichen der Gehäuseseitenflächen zugeordnet sind. Auch diese Kühlrippen tragen zur Leistungssteigerung des Antriebsmotors bei vergleichsweise kleinem Gehäusequerschnitt bei, wobei ihre Anordnung in benachbarten Bereichen der Gehäuseseitenflächen zu einer Profilquerschnittsausnutzung zwischen den Profilecken führt, in denen die der Befestigung dienenden Längsnuten bzw. Durchgangsbohrungen vorzugsweise angeordnet sind.

Alle Motor- und Modulgehäuse weisen stirnseitig jeweils Versorgungs- und/oder Steuerleitungsanschlüsse auf. Infolgedessen ist es möglich, nicht nur den axialen Verbindungsaufbau zu vereinheitlichen, sondern auch ein achsparalleles Durchschleifen aller Leitungen zu erreichen, die der Versorgung der jeweiligen Antriebs- und Einbauteile dienen. Versorgungsleitungen dienen beispielsweise der Stromzufuhr eines Elektroantriebs oder einer Elektromagnetbremse und Steuerleitungen dienen dem Steuern oder Messen durch Steuer oder Meßmodule. Die Leitungsanschlüsse sind nicht auf elektrische Leitungen beschränkt, sondern können auch hydraulische bzw. pneumatische Leitungen betreffen.

Vorteilhafterweise hat ein Gehäuse in einer Durchgangsausnehmung jeweils ein Patrizen- und ein Matrizenanschlußteil, die bedarfsweise an eine Abzweigmatrize angeschlossen sind. Infolgedessen können Gehäuse zusammengebaut werden, in dem ein Patrizen-mit einem Matrizenanschlußteil zusammengesteckt wird, wobei diese Steckverbindung auf die ohnehin zusammensteckartige Verbindung der Gehäuse abgestimmt ist. Bei einem Zusammenbauvorgang erfolgt also das Durchschleifen der Leitungen durch einen einmaligen Steckvorgang, der sowohl den mechanischen Zusammenbau der Gehäuse trifft, als auch das Zusammenschalten der Leitungen. Es entfallen jedwede besonderen Anschlußmaßnahmen der Module bezüglich ihrer Leitungen, nachdem der mechanische Zusammenbau erfolgt ist.

Insbesondere für die Kupplung elektrischer Leitungen hat jedes Anschlußteil eine Vielzahl einander paralleler Stecker/ Buchsen-Stifte, und die Anschlußteile sind miteinander und mit der Abzweigmatrize über gleiche Stecker/Buchsen-Stifte verbunden. Der mechanische Aufbau der Anschlußteile bzw. der Leitungsanschlüsse wird damit sehr einfach gestaltet, weil die Stecker/Buchsen-Stifte als elektrisch leitende Teile in einfacher Weise in die Anschlußteile eingebaut und mit einer Abzweigmatrize zusammengebaut werden können.

Eine gute Ausnutzung des zur Verfügung stehenden Querschnitts ergibt sich, wenn alle Motor- bzw. Modulgehäuse ein rechteckiges Querschnittsprofil aufweisen, und die kreiszylindrische Ausnehmung in der einen Profilhälfte und die hinterschnittenen Längsnuten sowie die Leitungsanschlüsse in der anderen Profilhälfte untergebracht sind. Die kreiszylindrische Ausnehmung kann dann einen vergleichsweise großen Durchmesser haben, während sich die Längsnuten und Leitungsanschlüsse querschnittsmäßig entsprechend der anderen Profilhälfte aufeinander abstimmen lassen. In diesem Sinne ist es – auch für quadratische Querschnitte – vorteilhaft, daß die Durchgangsausnehmungen, die Anschlußteile und die Abzweigmatrize sowie ein Anschlußstecker des Anschlußmoduls einen gleichen, etwa dreieckförmigen Querschnitt aufweisen.

Vorteilhafterweise ist ein Motormodul ein Anschlußmodul mit mehreren auf unterschiedliche Seitenflächen und/oder die freie Stirnfläche des Modulgehäuses verteilten, bedarfsweise auch unterschiedlich ausgebildeten Anschlußteilen. Eine solche Ausgestaltung eines Motormoduls zu einem Anschlußmodul erhöht die Vielfältigkeit, mit der der Antriebsmotor angeschlossen werden kann. Beispielsweise kann eines der Anschlußteile mit Versorgungsleitungen und ein anderes Anschlußteil mit Steuerleitungen besetzt werden. Beide Anschlußteile sind im Anschlußmodul mit den in den Gehäusen achsparallel durchlaufenden Versorgungs- und Steuerleitungen verbunden, so daß die jeweils betreffenden Antriebs-und Einbauteile zutreffend beaufschlagt werden. Es ist insbesondere auch möglich, die Anschlußteile den Anschlußleitungselementen entsprechend anzupassen, also die Belegung der Kontaktstifte entsprechend abzustimmen, so daß die Anschlußteile als Adapter in schaltungsmäßiger Hinsicht dienen, wie auch die Anschlußteile mechanisch so auf Anschlußleitungen abzustimmen, daß beispielsweise abweichende Steckerprofile verwendet werden können.

Die Motormodule sind Getriebe und/oder Bremse und/oder Tachometer und/oder Inkrementalgeber, die bedarfsweise einen der Ansnehmung des Modulgehäuses angepaßten Einbauzylinder aufweisen. Diese Module finden mit ihrem Aufbau innerhalb der kreiszylindrischen Ausnehmung der Gehäuse den jeweiligen Erfordernissen entsprechend genügend Platz.

Die Motormodule sind mit dergleichen zentralen, mit einem Motorabtrieb fluchtenden Anschlußeinrichtung versehen, um den Aufbau des gesamten Aggregats bzw. Antriebsmotors zu vereinfachen und dabei die Weiterleitung der Drehbewegung des Motors mit einfachen Mitteln zu erreichen. Mit der Anschlußeinrichtung ist der Anbau der Motormodule an beiden Seiten des Motorgehäuses möglich, also auch dann, wenn der Elektromotor eine zweite Abtriebs- bzw. Vielkeilwelle hat, mit der Drehverstellungen bzw. Drehmomentweiterleitungen zu bewirken sind. Mit einer derartigen Anschlußeinrichtung läßt sich auch erreichen, daß als Motormodul ein zweites Antriebsaggregat angeschlossen wird, beispielsweise ein zweiter, in ein mit demselben Querschnittsprofil versehenes Gehäuse eingebauter Elektromotor. Die Anschlußeinrichtung kann so ausgelegt sein, daß sie Adapter für die miteinander zu verbindenden Wellen hat.

In konstruktiver Ausgestaltung weist die Anschlußeinrichtung eine Durchgangsbohrung mit mindestens einer darin drehfest angeordneten und mit dem Motorabtrieb gekuppelten Welle auf. Dieser Aufbau der Anschlußeinrichtung ist in besonderer Weise auf den einfachen Zusammenbau der Motormodule untereinander und mit einem oder mehreren Antriebselementen abgestimmt.

Die Erfindung wird anhand von in der Zeichnung dargestellten Ausführungsbeispielen erläutert. Es zeigt :

Fig. 1 die vordere Hälfte eines erfindungsgemäßen Antriebsmotors,

Fig. 2 die hintere Hälfte des Antriebsmotors der Fig. 1,

Fig. 3 eine Ansicht des Anschlußmoduls der Fig. 2 in Richtung A bei abgenommener Abdeckkappe,

Fig. 4 eine vergrößerte Darstellung eines Anschlußmoduls mit Schnittdarstellung im Bereich der Leitungsanschlüsse,

Fig. 5 eine Anschlußsteckerdarstellung,

Fig. 6 eine Darstellung zweier zusammengesteckter Module,

Fig. 7 eine Ansicht eines Anschlußmoduls gemäß Fig. 3 mit unterschiedlichem Profilquerschnitt und

Fig. 8 eine Seitenansicht des Moduls der Fig. 7 in Richtung B.

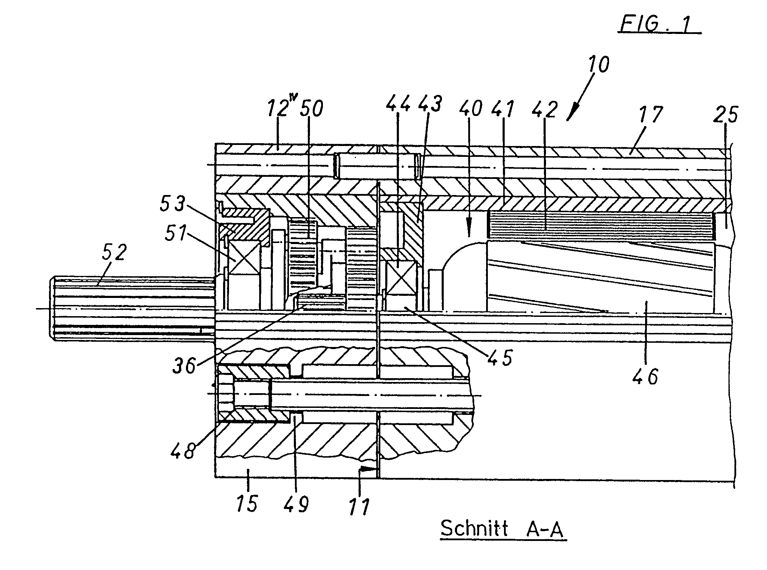

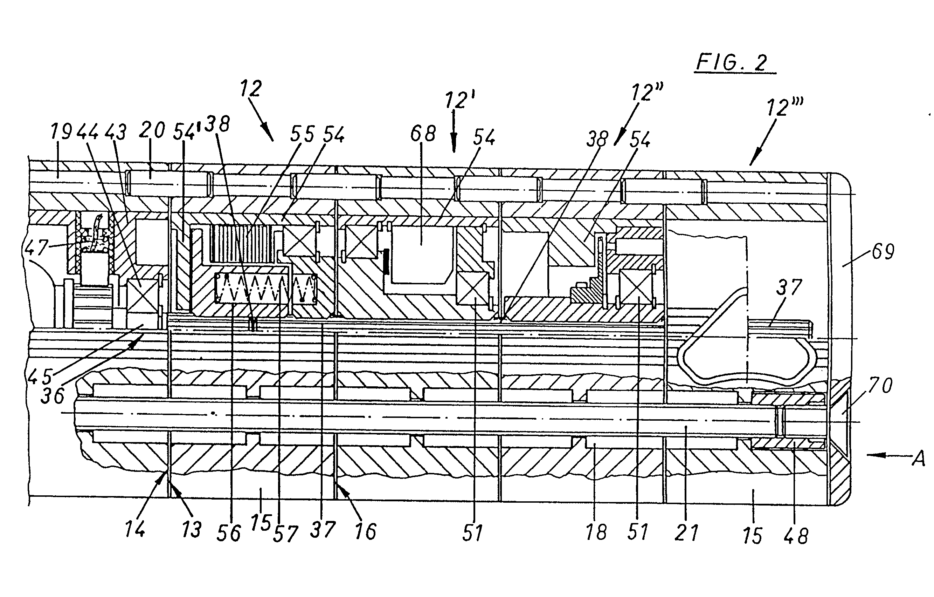

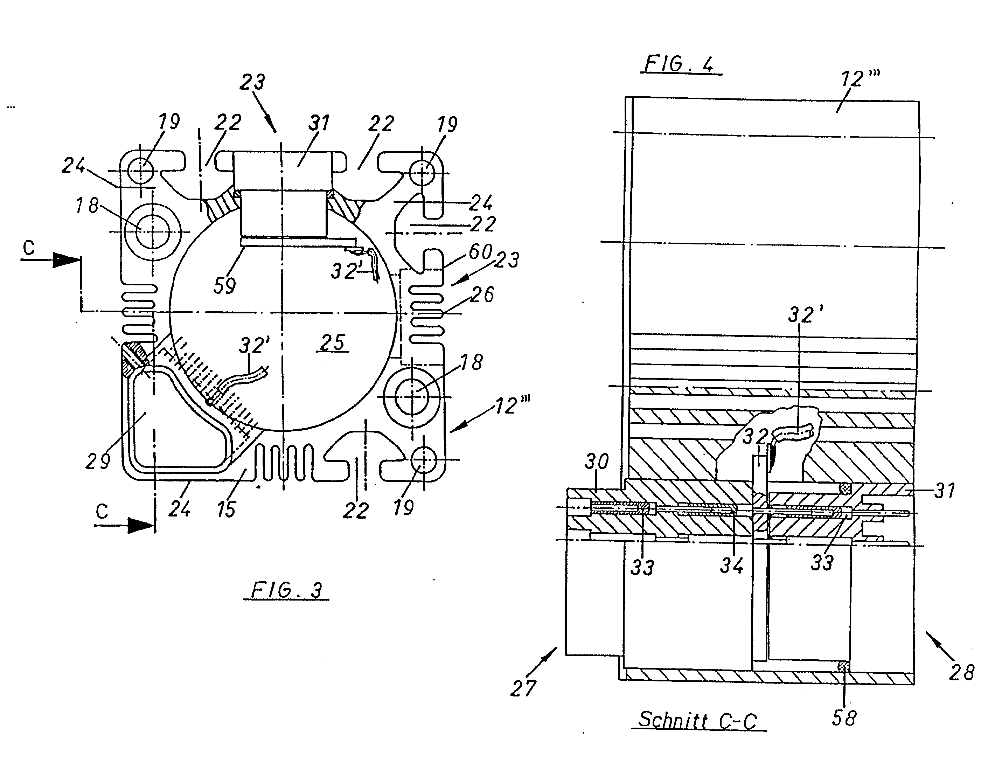

Der in den Fig. 1, 2 dargestellte Antriebsmodul 10 hat ein Motorgehäuse 17, in dem ein Elektromotor 40 angeordnet ist. Das Motorgehäuse 17 hat den aus Fig. 3 ersichtlichen Querschnitt des Gehäuses 15 eines Anschlußmoduls 12'''. Beiden Gehäusen 17, 15 ist eine kreiszylindrische Ausnehmung 25 gleicher Größe zur Aufnahme von Antriebs- und Einbauteilen gemeinsam. Im Motorgehäuse 17 ist innerhalb dieser Ausnehmung 25 ein Einbauzylinder 41 eingebaut, der einen Stator 42, zwei Lagerringe 43 für Wälzlager 44 von Motorabtriebswellen 45 eines Rotors 46 trägt, dessen Stromversorgung mit einem ebenfalls vom Zylinder 41 getragenen Bürstensatz 47 erfolgt.

Das Motorgehäuse 17 hat Gehäuseflansche 11, 13 an seinen Stirnseiten, also abtriebswellenseitig. An diesen Gehäuseflanschen 11, 13 sind Motormodule 12 bis 12$^{IV}$ in der dargestellten Weise angebaut. Diese Motormodule haben Modulgehäuse 15 mit demselben Außenumfang bzw. derselben Querschnittsgestaltung, wie das Motorgehäuse 17, vergl. Fig. 3. Es ist infolgedessen möglich, sie als stranggepreßte und abgelängte Profilstücke herzustellen und sie bedarfsweise aneinanderzureihen. Hierzu ist das durch den Herstellungsvorgang bedingte identische Flanschbild der Anschlußflansche 11, 13, 14 und 16 eine Grundvoraussetzung. Dieses gleiche Flanschbild ermöglicht auch den Zusammenbau bzw. den Zusammenhalt der jeweiligen Gehäuse. Jedes Gehäuse besitzt nämlich Durchgangsbohrungen 18 bzw. 19, in die in der dargestellten Weise Zentrierstifte 20 bzw. Zuganker 21 eingesetzt sind. Die Befestigung der Zuganker erfolgt mit Ankermutter 48, die in die Durchgangsbohrungen 18 eingesteckt und auf die als Gewindestangen ausgebildeten Zuganker 21 aufgeschraubt werden, wobei sie sich beim Zusammenspannen der Gehäuse 17, 15 an in den Durchgangsbohrungen 18 vorhandenen Stützkragen 49 abstützen.

Die linke Abtriebswelle 45 des Antriebsmotors 10 ist mit einem als Untersetzungsgetriebe ausgebildeten Getriebe 12$^{IV}$ drehantriebsmäßig verbunden, wobei das Getriebe eine an die kreiszylinderförmige Ausnehmung 25 angepaßte herkömmliche Ausgestaltung mit Zahnrädern 50, Wälzlagerung 51, Abtriebswelle 52 und Lagerring 53 hat. Sämtliche Teile dieses Moduls werden von einem Einbauzylinder 54 zusammengehalten, der außen in Anpassung an die Ausnehmung 25 des Modulgehäuses 15 kreiszylindrisch ist und beispielsweise mit Klemmpaßsitz in das Modulgehäuse 15 eingebaut ist.

Eine derartige Befestigung der Einbauteile eines Moduls in das Modulgehäuse 15 ist auch bei den Modulen 12 bis 12″ vorgesehen, die als Bremse, Tachogenerator und Inkrementalgeber ausgebildet sind. Das Modul 12 hat eine elektrische Bremsspule 55, die bei Erregung einen axial verschieblichen Anker 56 entgegen der Kraft der Feder 57 anzieht und dadurch eine Reibungsbeaufschlagung des Bremsflansches 54′ beseitigt. Die Module 12′ und 12″ haben als Tachogenerator und Inkrementalgeber entsprechende, teils an den Einbauzylindern 54 festliegende und teils umlaufende und über Wälzlager 51 abgestützte, motorbeaufschlagte Einbauteile.

Von besonderer Bedeutung ist außer dem beschriebenen mechanischen Aufbau der Gehäuse dessen Ausrüstung mit einem axial parallelen Leitungssystem, um den Elektromotor 40 bzw. die Funktionsteile der Module 12 bis 12″ mit elektrischer Energie oder Steuerbefehlen zu versorgen, oder ihnen Meßwerte abzunehmen. Zu diesem Zweck sind alle Motor- und Modulgehäuse 15, 17 mit Versorgungs- und/oder Steuerleitungsanschlüssen 27, 28 versehen. Ein derartiger Leitungsanschluß 27 oder 28 besteht aus einem Patrizenanschlußteil 30 oder einem Matrizenanschlußteil 31, nämlich einem aus Kunststoff bestehenden Körper, der gemäß Fig. 4 mit einer Dichtung 58 in eine Ausnehmung 29 des Motorgehäuses 17 bzw. des Modulgehäuses 15 eingesetzt ist. Die Anschlußteile 30, 31 sind dabei der speziellen Querschnittsform der Ausnehmung 29 angepaßt, nämlich in wesentlichen dreieckig, weil die Ausnehmung 29 im Bereich einer Profilecke 24 des rechtwinkligen Gehäuses 17 angeordnet ist.

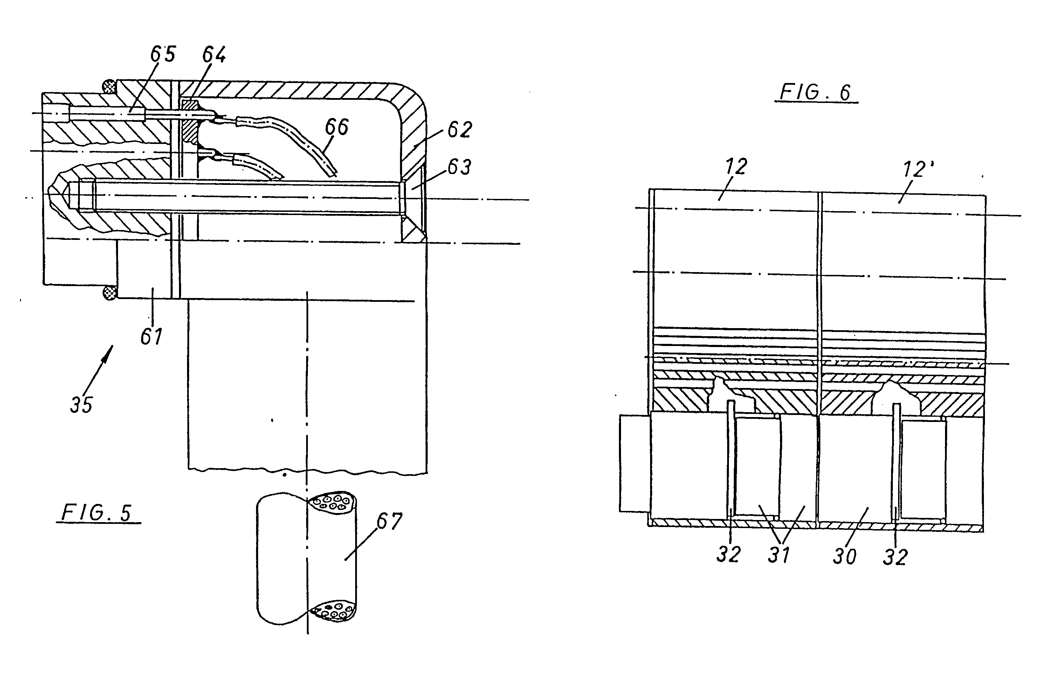

Alle Module 12 bis 12‴ sind in derselben Weise mit Anschlußteilen 30, 31 versehen, so daß sie beispielsweise gemäß Fig. 6 aneinandergereiht werden können, wobei das Patrizenanschlußteil 30 des Moduls 12′ mit dem Matrizenanschlußteil 31 des Moduls 12 den erforderlichen mechanischen und elektrischen Kontakt herstellt.

Gemäß Fig. 4 ist zwischen einem Patrizenanschlußteil 30 und einem Matrizenanschlußteil 31 eine Abzweigmatrize 32 angeordnet. Die Matrizenleitungen 32′ stellen den elektrischen Kontakt zu anderen Anschlußteilen 31 her, die gemäß Fig. 3 auf ihrer Rückseite jeweils eine Anschlußplatine 59 aufweisen. 60 bezeichnet in Fig. 3 einen Bereich, in dem ein weiteres Anschlußteil angebracht werden könnte, beispielsweise ein solches, welches dem Wunsch des Betreibers des Antriebsmotors 10 entsprechend eine besondere Ausgestaltung hat.

Außer über die Anschlußteile der Fig. 3 kann eine Versorgung der Leitungen des Antriebsmotors 10 auch mit einem Anschlußstecker 35 gemäß Fig. 5 erfolgen, der ein dem Patrizenanschlußteil 30 in seinem Aufbau sehr ähnliches Patrizenteil 61 hat, daß an einem Steckerkörper 62 mit einer Befestigungsschraube 63 befestigt ist und über eine Anschlußplatine 64 für Stecker/Buchsen-Stifte 65 eine elektrische Verbindung mit Anschlußleitungen 66 einer beweglichen Zuleitung 67 schafft.

Die Stecker/Buchsen-Stifte 65 entsprechen denen der Fig. 4, wo sie mit 33, 34 bezeichnet sind. Sowohl das Patrizenanschlußteil 30, als auch das Matrizenanschlußteil 31 weisen also jeweils einem Satz parallel liegender Stecker/Buchsen-Stifte 33 gegebenenfalls unterschiedlicher Querschnitte für unterschiedliche Stromstärken auf, die über gleiche Stecker/Buchsen-Stifte 34 miteinander und mit der Abzweigmatrize 32 elektrisch verbunden sind. Die Abzweigmatrize 32 ist beispielsweise steckkartenartig ausgebildet.

Eine Abzweigmatrize 32 ist in jedem Gehäuse 15 oder 17 vorhanden, bei dem eine Kontaktierung seiner Antriebs- bzw. Einbauteile erforderliche ist. Auf diese Weise wird beispielsweise bei den Modulen 12, 12′ der Fig. 6 mittels der Abzweigmatrizen 32 eine elektrische Kontaktierung der Bremsspule 55 oder einer Meßwicklung 68 des Tachogenerators des Moduls 12′ hergestellt.

Fig. 2 läßt erkennen, daß der Anschlußmodul 12‴ an seinem freien Ende mit einer Abdeckkappe 69 verkleidet ist, die mit Befestigungsschrauben 70 in Ankermuttern 48 der Durchgangsbohrungen 18 eingeschraubt sind.

Aus Fig. 3 ist auch zu entnehmen, daß die Gehäuse 15, 17 jeweils fluchtende Längsnuten 22 haben, die hinterschnitten sind, um in die Hinterschneidungen eingreifende Anschlußteile aufzunehmen, mit denen der Motor 10 z.B. an einem Gestell einer Werkzeugmaschine befestigt werden kann. Die Hinterschneidungen sind pilzkopfartig, so daß sie sich in besonders günstiger Weise raumsparend z.B. in einer Profilecke 24 paarweise anordnen lassen. Um eine möglichst variantenreiche Befestigung des Antriebsmotors 10 zu erreichen, sind zwei bzw. mehrere Längsnuten 22 mindestens zwei Gehäuseflächen 23 verteilt zugeordnet, wie Fig. 3 zeigt.

Außerdem haben die Gehäuse 17, 15 längsdurchlaufende Kühlrippen 26, die sich radial erstrecken und in einem Profilbereich angeordnet sind, in dem die Gehäuseseitenflächen 23 der Ausnehmung 25 benachbart angeordnet sind. Damit und auch durch die Längsnuten 22 ergeben sich besonders günstige Wärmeableitverhältnisse, die die Voraussetzung für eine höhere Leistung des Antriebsmotors bzw. für dessen kleinere Gehäuseabmessungen sind.

Desweiteren sind alle Module so aufgebaut, daß sie eine Anschlußeinrichtung aufweisen, welche eine Motorabtriebswelle 45 aufnehmen kann. Gemäß Fig. 2 ist eine solche Motoranschlußeinrichtung eine Durchgangsbohrung 38, in die eine den Motorabtrieb 36 bildende Vielkeilwelle eingreift, als die die Abtriebswelle 45 ausgebildet ist, die mit dem axial beweglichen Bremsenteil 56 drehfest verbunden ist. In die Durchgangsbohrung 38 der Module greift eine Welle 37 zur drehfesten Verbindung ein, im Falle des Moduls 12 in den axial verstellbaren Bremsenteil 56. Diese Welle 37 durchsetzt auch entsprechende Durchgangsbohrungen der Module 12′, 12″ bis hinein in den Anschlußmodul 12‴. Die Welle 37 ist einstückig und sorgt für die Beaufschlagung der drehanzutreibenden Einbauteile der Module 12′, 12″. Im Anschlußmodul 12‴ ist die Welle 37 für den Anschluß an sich nicht erforderlich, bietet jedoch die Möglichkeit, einen weiteren Modul oder einen weiteren Elektromotor problemlos anzuschließen, gegebenenfalls mit Adapter.

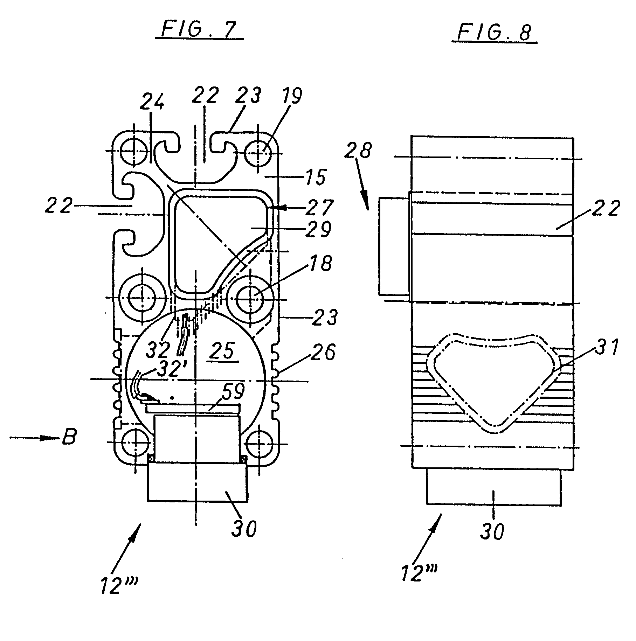

Bei dem in den Fig. 7, 8 dargestellten Anschlußmodul 12‴ besitzt das Modulgehäuse 15 einen rechteckigen Querschnitt, was beispielsweise für geringe Antriebsleistungen des Antriebsmotors vorteilhaft ist, bei dem die Ausnehmung 25 nur einen geringen Durchmesser zu haben braucht und in einer Profilhälfte untergebracht werden kann. Die andere Profilhälfte wird dann mit der Durchgangsausnehmung 29 und zwei Längsnuten 22 in flächenmäßig günstiger Anordnung besetzt. Dabei werden die für die Zentrierstifte 20 vorgesehenen Durchgangsbohrungen 19 in den Profilecken 24 vorgesehen, während die Durchgangsbohrungen 18 für den Zuganker bzw. die Befestigung der Gehäuse 15 und 17 miteinander dem Mittelbereich der Gehäuseseitenflächen 23 zugeordnet sind.

Auch dieser Anschlußmodul 12‴ besitzt ein oder mehrere Anschlußteile 30 oder 31, die über Anschlußplatinen 59 und Matrizenleitungen 32′ mit einer strichpunktiert dargestellten Abzweigmatrize 32 verbunden sind, die gemäß Fig. 4 zwischen einem Patrizen- und einem Matrizenanschlußteil 30, 31 angeordnet ist und für die elektrische Beaufschlagung der Versorgungs- und Steuerleitungsanschlüsse sorgt.

## Ansprüche

1. Antriebsmotor (10), insbesondere elektrischer Servomotor, mit einem Motorgehäuse (17), das einen abtriebswellenseitigen Gehäuseflansch (11) hat, an dem ein mit dem Antriebsmotor (10) drehantriebsmäßig zusammenwirkender Motormodul (12$^{IV}$) mit einem Anschlußflansch seines Modulgehäuses (15) befestigt ist, wobei ein weiterer, ein Modulgehäuse (15) aufweisender Motormodul (12) gleichachsig anbaubar ist, **dadurch gekennzeichnet,** daß das Motorgehäuse (17) einen dem abtriebswellenseitigen Gehäuseflansch (11) parallelen gleichachsigen Gehäuseflansch (13) hat, und daß sowohl das Motorgehäuse (17) als auch mindestens ein Modulgehäuse (15) aus stranggepreßten und abgelängten Profilstücken bestehen, die alle dasselbe Querschnittsprofil haben und dem Zusammenspannen der Gehäuse (17, 15) dienende fluchtende Durchgangsbohrungen (18, 19) aufweisen.

2. Motor nach Anspruch 1, **dadurch gekennzeichnet,** daß in den Verbindungsbohrungen (18, 19) der Motor- und Modulgehäuse (17, 15) letztere zentrierende und/oder zusammenspannende Zentrierstifte (20) bzw. Zuganker (21) vorhanden sind.

3. Motor nach einem der Ansprüche 1 bis 2, **dadurch gekennzeichnet,** daß alle Motor- und Modulgehäuse (17, 15) ein rechtwinkliges Querschnittsprofil mit jeweils mindestens einer fluchtenden hinterschnittenen Längsnut (22) haben, die in einer Profilecke (24) angeordnet und bedarfsweise auf mindestens zwei Gehäuseseitenflächen (23) verteilt sind.

4. Motor nach einem der Ansprüche 1 bis 3, **dadurch gekennzeichnet,** daß alle Motor- und Modulgehäuse (17, 15) eine kreiszylindrische, zur Aufnahme von Antriebs- und Einbauteilen bestimmte Ausnehmung (25) haben, der radiale Kühlrippen (26) in benachbarten Bereichen der Gehäuseseitenflächen (23) zugeordnet sind.

5. Motor nach einem der Ansprüche 1 bis 4, **dadurch gekennzeichnet,** daß alle Motor- und Modulgehäuse (17, 15) stirnseitig jeweils Versorgungs- und/oder Steuerleitungsanschlüsse (27, 28) aufweisen.

6. Motor nach Anspruch 5, **dadurch gekennzeichnet,** daß ein Gehäuse (17 oder 15) in einer Durchgangsausnehmung (29) jeweils ein Patrizen- und ein Matrizenanschlußteil (30, 31) hat, die bedarfsweise an eine Abzweigmatrize (32) angeschlossen sind.

7. Motor nach Anspruch 6, **dadurch gekennzeichnet,** daß jedes Anschlußteil (30, 31) eine Vielzahl einander paralleler Stecker/Buchsen-Stifte (33) hat, und daß die Anschlußteile (30, 31) miteinander und mit der Abzweigmatrize (32) über gleiche Stecker/Buchsen-Stifte (34) verbunden sind.

8. Motor nach einem der Ansprüche 1 bis 7, **dadurch gekennzeichnet,** daß alle Motor- und Modulgehäuse (17, 15) ein rechteckiges Querschnittsprofil aufweisen, und daß die kreiszylindrische Ausnehmung (25) in der einen Profilhälfte und die hinterschnittenen Längsnuten (22) sowie die Leitungsanschlüsse (27, 28) in der anderen Profilhälfte untergebracht sind.

9. Motor nach einem der Ansprüche 1 bis 8, **dadurch gekennzeichnet,** daß ein Motormodul ein Anschlußmodul (12'') mit mehreren auf unterschiedliche Seitenflächen (23) und/oder die freie Stirnfläche des Modulgehäuses (15) verteilten, bedarfsweise auch unterschiedlich ausgebildeten Anschlußteilen (30 oder 31) ist

10. Motor nach einem der Ansprüche 1 bis 9, **dadurch gekennzeichnet,** daß die Durchgangsausnehmungen (29), die Anschlußteile (30, 31) und die Abzweigmatrize (32) sowie ein Anschlußstecker (35) des Anschlußmoduls (12'') einen gleichen, etwa dreieckförmigen Querschnitt aufweisen.

11. Motor nach einem der Ansprüche 1 bis 10, **dadurch gekennzeichnet,** daß die Motormodule (z.B. 12) Übersetzungsgetriebe und/oder Bremse und/oder Tachometer und/oder Inkrementalgeber sind, die bedarfsweise einen der Ausnehmung (25) des Modulgehäuses (15) angepaßten Einbauzylinder (54) aufweisen.

12. Motor nach einem der Ansprüche 1 bis 11, **dadurch gekennzeichnet,** daß die Motormodule mit der gleichen zentralen, mit einem Motorabtrieb (36) fluchtenden Anschlußeinrichtung versehen sind.

13. Motor nach Anspruch 12, **dadurch gekennzeichnet,** daß die Anschlußeinrichtung eine Durchgangsbohrung (38) mit mindestens einer darin drehfest angeordneten und mit dem Motorabtrieb (36) gekuppelten Welle (37) aufweist.

## Claims

1. Drive motor (10), in particular an electrical servo motor, with a motor casing (17), which has a casing flange (11) on the drive output shaft side, to which a motor module (12$^{\text{IV}}$), which cooperates with the drive motor (10) in the manner of a rotary drive, is attached by a connecting flange of its module casing (15), whereby a further motor module (12) having a module casing (15) can be attached coaxially, characterised in that the motor casing (17) has a casing flange (13) coaxially parallel to the casing flange (11) on the drive output shaft side, and both the motor casing (17) as well as at least one module casing (15) consists of extruded and parted off profile pieces, which all have the same cross sectional profile and have aligned through holes (18, 19) used to clamp the casings (17, 15) together.

2. Motor in accordance with claim 1, characterised in that centring studs (20) or tie rods (21) are provided in the connecting holes (18, 19) of the motor casing and the module casing (17, 15) for centring them and/or clamping them together.

3. Motor in accordance with one of claims 1 to 2, characterised in that all motor and module casings (17, 15) have a rectangular cross sectional profile having at least one aligned relief cut longitudinal groove (22) in each case, which are disposed in a corner of the profile (24) and are distributed over at least two casing side faces (23) as required.

4. Motor in accordance with any of claims 1 to 3, characterised in that all motor and module casings (17, 15) have a cylindrical recess (25) designed for accepting drive and installation parts, with which radial cooling fins (26) in adjacent regions of the casing side faces (23) are associated.

5. Motor in accordance with any of claims 1 to 4, characterised in that all motor and module casings (17, 15) have supply connections and/or control line connections (27, 28) on the end faces respectively.

6. Motor in accordance with claim 5, characterised in that a casing (17 or 15) has a male connecting part and a female connecting part (30, 31) respectively in a through recess (29), which are connected to a branch female part (32) as required.

7. Motor in accordance with claim 6, characterised in that each connecting part (30, 31) has a plurality of mutually parallel plug/socket pins (33), and the connecting parts (30, 31) are connected to each other and to the branch female part (32) via identical plug/socket pins (34).

8. Motor in accordance with any of claims 1 to 7, characterised in that all motor and module casings (17, 15) have a rectangular cross sectional profile and the cylindrical recess (25) is accommodated in one of the profile halves and the relief cut longitudinal grooves (22) and the line connections (27, 28) are accommodated in the other profile half.

9. Motor in accordance with any of claims 1 to 8, characterised in that a motor module is a connecting module (12‴) having several connecting parts (30 or 31), which are differently designed as required, on various side faces (23) and/or the exposed end face of the module casing (15).

10. Motor in accordance with any of claims 1 to 9, characterised in that the through recesses (29), the connecting parts (30, 31) and the branch female part (32) plus a connecting plug (35) of the connecting module (12‴) have an identical, almost triangular cross section.

11. Motor in accordance with any claims 1 to 10, characterised in that the motor modules (e.g. 12) are gears and/or brakes and/or tachometers and/or incremental encoders, which have an installation cylinder (54) to suit the recess (25) of the module casing (15) as required.

12. Motor in accordance with any of claims 1 to 11, characterised in that the motor modules are provided with the same central connecting facility in alignment with a motor drive output (36).

13. Motor in accordance with claim 12, characterised in that the connecting facility has a through hole (38) having at least one shaft (37) securely disposed therein to prevent rotation and coupled to the motor driver output (36).

## Revendications

1. Moteur d'entraînement (10), en particulier servomoteur électrique, comportant un carter de moteur (17) qui possède une bride de carter (11) située côté arbre de sortie et à laquelle un module moteur (12^IV) coopérant dans une relation d'entraînement en rotation avec le moteur d'entraînement (10) est fixé à l'aide d'une bride de raccordement de son carter de module (15), étant précisé qu'un second module moteur (12) possédant un carter de module (15) peut être rapporté suivant le même axe, caractérisé en ce que le carter de moteur (17) comporte une bride de carter équiaxe (13) parallèle à la bride de carter (11) située coté arbre de sortie, et en ce qu'aussi bien le carter de moteur (17) qu'au moins un carter de module (15) sont constitués de pièces profilés extrudées et mises à longueur, lesquelles possèdent toutes le même profil en section transversale et présentent des perçages traversants alignés (18, 19) servant à l'assemblage par serrage des carters (17, 15).

2. Moteur selon la revendication 1, caractérisé en ce que dans les perçages de liaison (18, 19) des carters de moteur et de module (17, 15), des goupilles de centrage (20), respectivement des tirants d'ancrage (21) sont prévus pour centrer et/ou assembler par serrage ces derniers.

3. Moteur selon l'une des revendications 1 à 2, caractérisé en ce que tous les carters de moteur et de module (17, 15) ont des profils en section transversale rectangulaires comportant chacun au moins une rainure longitudinale en contre-dépouille (22), les rainures longitudinales étant alignées, disposés dans un coin (24) du profil et réparties, selon les besoins, sur au moins deux faces latérales de carter (23).

4. Moteur selon l'une des revendications 1 à 3, caractérisé en ce que tous les carters de moteur et de module (17, 15) comportent une cavité cylindrique circulaire (25) destinée à recevoir des éléments d'entraînement et de montage, et à laquelle sont associées des ailettes de refroidissement (26) dans des zones voisines des faces latérales de carter (23).

5. Moteur selon l'une des revendications 1 à 4, caractérisé en ce que tous les carters de moteur et de module (17, 15) présentent respectivement, côté frontal, des raccords de lignes d'alimentation et/ou de commande (27, 28).

6. Moteur selon la revendication 5, caractérisé en ce que chaque carter (17 ou 15) comporte dans une cavité traversante (29) des éléments de raccordement mâle et femelle (30, 31) qui, selon les besoins, sont reliés à une matrice de dérivation (32).

7. Moteur selon la revendication 6, caractérisé en ce que chaque élément de raccordement (30, 31) comporte plusieurs broches formant fiche/douille (33) parallèles les unes aux autres, et en ce que les éléments de raccordement (30, 31) sont reliés entre eux et à la matrice de dérivation (32) par l'intermédiaire de broches formant fiche/douille (34) identiques.

8. Moteur selon l'une des revendications 1 à 7, caractérisé en ce que tous les carters de moteur et de module (17, 15) présentent un profil en section transversale rectangulaire, et en ce que la cavité cylindrique circulaire (25) est logée dans l'une des moitiés du profil, tandis que les rainures longitudinales en contre-dépouille (22) ainsi que les raccords de lignes (27, 28) sont logés dans l'autre moitié du profil.

9. Moteur selon l'une des revendications 1 à 8, caractérisé en ce qu'un module moteur est un module de raccordement (12‴) comportant plusieurs éléments de raccordement (30 ou 31) répartis sur des faces latérales différentes (23) et/ou sur la face frontale libre du carter de module (15), et, selon les besoins, également conçus différemment.

10. Moteur selon l'une quelconque des revendications 1 à 9, caractérisé en ce que les cavités traversantes (29), les éléments de raccordement (30, 31) et la matrice de dérivation (32) ainsi qu'un connecteur de raccordement (35) du module de raccordement (12‴) présentent une section transversale identique, approximativement triangulaire.

11. Moteur selon l'une des revendications 1 à 10, caractérisé en ce que les modules moteurs (12 par exemple) consistent en un engrenage réducteur et/ou en un frein et/ou en un tachymètre et/ou en un transmetteur incrémentiel qui, selon les besoins, présentent un cylindre de montage (54) adapté à la cavité (25) du carter de module (15).

12. Moteur selon l'une des revendications 1 à 11, caractérisé en ce que les modules moteurs sont munis du même dispositif de raccordement central aligné avec une sortie moteur (36).

13. Moteur selon la revendication 12, caractérisé en ce que le dispositif de raccordement présente un perçage traversant (38) comportant au moins un arbre (37) monté solidaire en rotation dans celui-ci et accouplé avec la sortie moteur (36).

EP 0 298 403 B1

_FIG. 1_

10

12" 50  44 43  40 41 42  17  25

53

51

52

36  45

46

48

15  49  11

Schnitt A-A

FIG. 2

EP 0 298 403 B1

FIG. 4

FIG. 3

Schnitt C-C

EP 0 298 403 B1

FIG . 6

FIG. 5

EP 0 298 403 B1

FIG. 7

FIG. 8

EP 0 298 403 B1